# EUROPEAN PATENT APPLICATION

(11) **EP 4 588 546 A1**
(43) Date of publication of application: **23.07.2025**
(21) Application number: 23865242.4
(22) Date of filing: 25.08.2023
(51) Int. Cl.: B01D 19/00, B01D 61/00, B01D 61/36, B01D 63/10

(54) **MEMBRANE SEPARATION SYSTEM AND METHOD FOR OPERATING MEMBRANE SEPARATION SYSTEM**

(30) Priority: 14.09.2022 JP 2022146501
(71) Applicant: Nitto Denko Corporation, Osaka 567-8680 (JP)
(72) Inventor: OGAWA, Tomoya, Ibaraki-shi Osaka 567-8680 (JP); KIMURA, Naomichi, Ibaraki-shi Osaka 567-8680 (JP); NAKANO, Takeshi, Ibaraki-shi Osaka 567-8680 (JP)
(74) Representative: Hoffmann Eitle
(86) International application number: PCT/JP2023/030826
(87) International publication number: WO 2024/057885

(57) **Abstract**

The present invention provides a membrane separation system suitable for recovering an organic compound efficiently. A membrane separation system 100 includes: a degassing unit 20 that degasses a fermented liquid S₀ containing a volatile organic compound C; and a membrane separation unit 10 having a pervaporation membrane 11 that separates a fermented liquid S having been degassed into a permeated fluid S₁ and a non-permeated fluid S₂. The membrane separation unit 10 has a feed space and a permeation space separated from each other by the pervaporation membrane 11. A pressure in the permeation space of the membrane separation unit 10 is reduced to have a value lower than that of a pressure in the degassing unit 20 during operation.

## Description

### TECHNICAL FIELD

The present invention relates to a membrane separation system and a method for operating a membrane separation system.

### BACKGROUND ART

There have been proposed methods for obtaining a non-petroleum-derived valuable material through fermentation by a microorganism. Especially, in recent years, there have been developed methods for producing a volatile organic compound (a fermented product), such as an alcohol, by fermenting a carbon source, such as glucose, by using a microorganism. The fermentation of a carbon source is carried out in an aqueous solution, for example. In this method, the fermentation by a microorganism stops in some cases when the content of the fermented product in the aqueous solution increases. In such cases, in order to continue the production of the fermented product by a microorganism, it is necessary to separate the fermented product from the aqueous solution while the fermentation is being carried out.

As an example of the method for separating a volatile organic compound from an aqueous solution containing the organic compound, a pervaporation method using a pervaporation membrane can be mentioned. The pervaporation method is suitable for separating a volatile organic compound from an aqueous solution containing various substances. The pervaporation method also tends to be able to better suppress the amount of energy consumption and the amount of emission of a gas, such as carbon dioxide, than a distillation method. By combining a membrane separation device that performs the pervaporation method with a fermenter that produces a fermented product, it is possible to produce a fermented product continuously. For example, Patent Literature 1 discloses a membrane separation system obtained by combining a membrane separation device with a fermenter.

### CITATION LIST

### Patent Literature

Patent Literature 1: JP 4048279 B

### SUMMARY OF INVENTION

### Technical Problem

In the case of separating a feed liquid into a permeated fluid and a non-permeated fluid using a pervaporation membrane, the permeated fluid is usually obtained in the state of a gaseous matter. That is, in the pervaporation method, the feed liquid having permeated through the pervaporation membrane evaporates, so that the permeated fluid that is a gaseous matter is obtained. The obtained permeated fluid that is a gaseous matter is liquefied, for example, by being cooled in a condensation unit provided at a position subsequent to the pervaporation membrane, so that the permeated fluid that is a liquid is obtained.

The present inventors have focused on the point that there is close relation between fermentation using a microorganism and a gas such as carbon dioxide. For example, a gas fermentation culture method requires to supply a gas, such as carbon dioxide, oxygen, or hydrogen, into a liquid culture medium containing a microorganism in order to carry out fermentation by a microorganism. Also, in the process of fermenting a carbon source in an aqueous solution, a gas, such as carbon dioxide, is generated as a byproduct. Therefore, a gas is dissolved in the aqueous solution containing a volatile organic compound obtained by the fermentation. Given the fact that the pervaporation membrane even allows a gas contained in the feed liquid to permeate therethrough, the present inventors found that a gas, such as carbon dioxide, remains in the permeated fluid that is a gaseous matter and that has been separated by the pervaporation membrane. Based on this finding, the present inventors have found a problem in that the gas, such as carbon dioxide, contained in the permeated fluid that is a gaseous matter decreases condensation efficiency of the condensation unit provided at a position subsequent to the pervaporation membrane. A decrease in condensation efficiency decreases efficiency in recovering an organic compound.

Therefore, the present invention is intended to provide a membrane separation system suitable for recovering an organic compound efficiently.

### Solution to Problem

The present invention provides a membrane separation system including:
a degassing unit that degasses a fermented liquid containing a volatile organic compound; and
a membrane separation unit having a pervaporation membrane that separates the fermented liquid having been degassed into a permeated fluid and a non-permeated fluid.

In another aspect, the present invention provides a method for operating a membrane separation system including a degassing unit and a membrane separation unit having a pervaporation membrane, the method including:
degassing a fermented liquid containing a volatile organic compound with the degassing unit; and
separating the fermented liquid having been degassed into a permeated fluid and a non-permeated fluid with the pervaporation membrane of the membrane separation unit.

### Advantageous Effects of Invention

The present invention can provide a membrane separation system suitable for recovering an organic compound efficiently.

### BRIEF DESCRIPTION OF DRAWINGS

FIG. 1 is a schematic configuration diagram showing an example of a membrane separation system of the present embodiment.
FIG. 2 is a schematic cross-sectional view showing an example of a membrane separation unit included in the membrane separation system.
FIG. 3 is a schematic cross-sectional view of a pervaporation membrane included in the membrane separation unit.
FIG. 4 is a schematic cross-sectional view showing an example of a degassing unit included in the membrane separation system.
FIG. 5 is a schematic cross-sectional view showing an example of a degassing membrane included in the degassing unit.
FIG. 6 is a developed perspective view schematically showing another example of the membrane separation unit.
FIG. 7 is a developed perspective view schematically showing another example of the degassing unit.
FIG. 8 is a schematic configuration diagram showing Modification 1 of the membrane separation system.
FIG. 9 is a schematic configuration diagram showing Modification 2 of the membrane separation system.
FIG. 10 is a schematic configuration diagram showing Modification 3 of the membrane separation system.
FIG. 11 is a schematic configuration diagram showing Modification 4 of the membrane separation system.
FIG. 12 is a schematic configuration diagram showing Modification 5 of the membrane separation system.
FIG. 13 is a schematic cross-sectional view showing an example of a membrane separation device included in the membrane separation system of Modification 5.
FIG. 14 is a schematic configuration diagram showing Modification 6 of the membrane separation system.

### DESCRIPTION OF EMBODIMENTS

A membrane separation system according to a first aspect of the present invention includes:
a degassing unit that degasses a fermented liquid containing a volatile organic compound; and
a membrane separation unit having a pervaporation membrane that separates the fermented liquid having been degassed into a permeated fluid and a non-permeated fluid.

According to a second aspect of the present invention, for example, in the membrane separation system according to the first aspect, the membrane separation unit further has a feed space and a permeation space separated from each other by the pervaporation membrane, and
the membrane separation system further includes a first decompression unit that decompresses an inside of the permeation space of the membrane separation unit, and a second decompression unit that decompresses an inside of the degassing unit.

According to a third aspect of the present invention, for example, in the membrane separation system according to the second aspect, a pressure in the permeation space of the membrane separation unit is reduced to have a value lower than that of a pressure in the degassing unit during operation.

According to a fourth aspect of the present invention, for example, the membrane separation system according to any one of the first to third aspects further includes a tank that stores the fermented liquid to be supplied to the degassing unit.

According to a fifth aspect of the present invention, for example, the membrane separation system according to any one of the first to fourth aspects further includes a discharge passage that allows a gas separated in the degassing unit to be discharged to an outside of the degassing unit.

According to a sixth aspect of the present invention, for example, in the membrane separation system according to any one of the first to fifth aspects, the degassing unit has a degassing membrane that separates a gas from the fermented liquid.

According to a seventh aspect of the present invention, for example, in the membrane separation system according to any one of the first to sixth aspects, the membrane separation unit is a spiral membrane element, and
the membrane element includes a central tube having a through hole, and a membrane leaf that has the pervaporation membrane and is wound around the central tube.

According to an eighth aspect of the present invention, for example, in the membrane separation system according to the sixth aspect, the degassing unit is a spiral membrane element, and
the membrane element includes a central tube having a through hole, and a membrane leaf that has the degassing membrane and is wound around the central tube.

According to a ninth aspect of the present invention, for example, in the membrane separation system according to the sixth or eighth aspect, a material which the degassing membrane is composed of is identical to a material which the pervaporation membrane is composed of.

According to a tenth aspect of the present invention, for example, the membrane separation system according to any one of the first to ninth aspects further includes a casing that accommodates the degassing unit and the membrane separation unit.

According to an eleventh aspect of the present invention, for example, in the membrane separation system according to the tenth aspect, the membrane separation unit further has a feed space and a permeation space separated from each other by the pervaporation membrane, and
the membrane separation system further includes a first decompression unit that decompresses an inside of the permeation space of the membrane separation unit, and a second decompression unit that decompresses an inside of the degassing unit.

According to a twelfth aspect of the present invention, for example, in the membrane separation system according to the eleventh aspect, a pressure in the permeation space of the membrane separation unit is reduced to have a value lower than that of a pressure in the degassing unit during operation.

According to a thirteenth aspect of the present invention, for example, in the membrane separation system according to any one of the first to twelfth aspects, the fermented liquid further contains a microorganism that generates the organic compound, and
the membrane separation system further includes, at a position preceding the degassing unit, an additional separation unit that separates the microorganism from the fermented liquid.

A method for operating a membrane separation system according to a fourteenth aspect of the present invention is a method for operating a membrane separation system including a degassing unit and a membrane separation unit having a pervaporation membrane, the method including:
degassing a fermented liquid containing a volatile organic compound with the degassing unit; and
separating the fermented liquid having been degassed into a permeated fluid and a non-permeated fluid with the pervaporation membrane of the membrane separation unit.

The present invention will be described in detail below. The following description is not intended to limit the present invention to a specific embodiment.

### <Embodiment of membrane separation system>

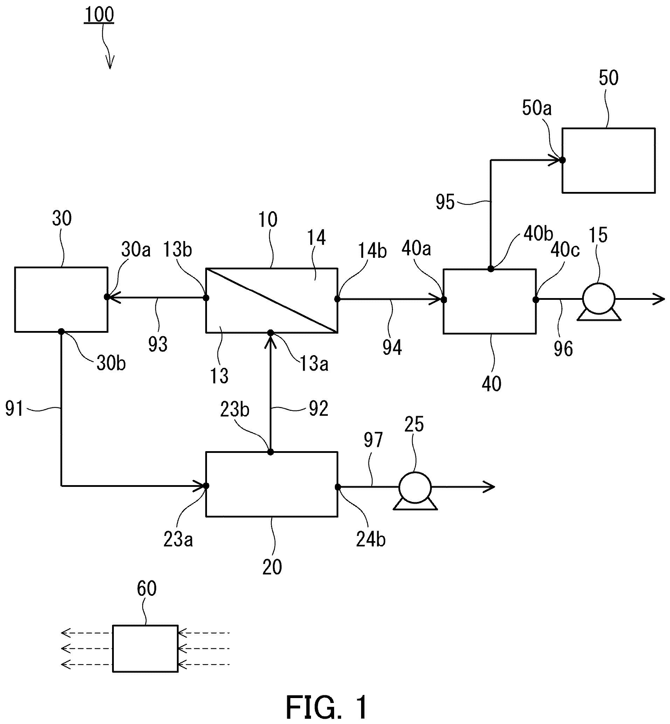

As shown in FIG. 1, a membrane separation system 100 of the present embodiment includes a degassing unit 20, and a membrane separation unit 10 having a pervaporation membrane. The degassing unit 20 is provided at a position preceding the membrane separation unit 10. The degassing unit 20 degasses a fermented liquid S₀ containing a volatile organic compound C. The pervaporation membrane of the membrane separation unit 10 separates a fermented liquid S having been degassed into a permeated fluid S₁ and a non-permeated fluid S₂. In the present embodiment, the word "degas" means to remove at least a part of or all of a gas contained in a liquid.

The fermented liquid S₀ is obtained by fermenting a carbon source, such as glucose or a synthesis gas, in an aqueous solution by using a microorganism. Therefore, the fermented liquid S₀ contains, in addition to the volatile organic compound C, a microorganism that generates the organic compound C. The microorganism that generates the organic compound C is typically a bacterium. Generally, a gas, such as carbon dioxide, is generated as a byproduct in the process of fermenting the carbon source in the aqueous solution. Therefore, the gas is present as a dissolved gas G in the fermented liquid S₀ obtained by fermentation. The gas G includes carbon dioxide. The fermented liquid S₀ contains, for example, water other than the organic compound C, the microorganism, and the gas G. The fermented liquid S₀ is typically an aqueous solution containing the organic compound C, the microorganism, and the gas G.

The degassing unit 20 separates the gas G dissolved in the fermented liquid S₀ from the fermented liquid S₀. The degassing unit 20 makes it possible to produce the fermented liquid S having a decreased content of the dissolved gas G, thereby making it possible to suppress a decrease in condensation efficiency of a condensation unit 40 provided at a position subsequent to the degassing unit 20. As a result, efficiency in recovering the organic compound C is improved. This is considered to be because of the following reason. The pervaporation membrane of the membrane separation unit 10 even allows a gas contained in a feed liquid to permeate therethrough. Therefore, when the fermented liquid S₀ containing the gas G is supplied, as it is, to the membrane separation unit 10, the gas G remains in the permeated fluid S₁ separated by the pervaporation membrane. That is, the gas G is contained in the permeated fluid S₁ to be supplied to the condensation unit 40. The condensation efficiency of the condensation unit 40 depends on a partial pressure of a gaseous matter to be condensed. For example, in the case of condensing a gaseous mixture of ethanol and carbon dioxide, a cooling temperature of the condensation unit 40 needs to be set lower and thus more energy is necessary than in the case of condensing a gaseous matter having an ethanol concentration of 100%. Moreover, in the case of a gaseous mixture of ethanol and carbon dioxide, for example, the ethanol contacts a cooling surface of the condensation unit 40 at lower frequency than in the case of a gaseous matter having an ethanol concentration of 100%. From these reasons, the larger an amount of the gas G contained in the permeated fluid S₁ is, the more the condensation efficiency of the condensation unit 40 is decreased.

The membrane separation unit 10 has the pervaporation membrane, and a feed space and a permeation space separated from each other by the pervaporation membrane. The membrane separation system 100 further includes a first decompression unit 15 that decompresses an inside of the permeation space of the membrane separation unit 10, and a second decompression unit 25 that decompresses an inside of the degassing unit 20.

Each of the first decompression unit 15 and the second decompression unit 25 may be a vacuum device such as a vacuum pump. The vacuum pump is typically a gas transport vacuum pump, and a reciprocating vacuum pump and a rotary vacuum pump, etc. can be mentioned. Examples of the reciprocating vacuum pump include a diaphragm vacuum pump and a rocking piston vacuum pump. Examples of the rotary vacuum pump include: a liquid seal pump; an oil rotary pump (a rotary pump); a mechanical booster pump; and various kinds of dry pumps such as a roots dry pump, a claw dry pump, a screw dry pump, a turbo dry pump, and a scroll dry pump. The pump as each of the first decompression unit 15 and the second decompression unit 25 may include a variable speed mechanism for changing a rotational speed, etc. An example of the variable speed mechanism is an inverter that drives a motor of the pump. By controlling the rotational speed, etc. of the pump by the variable speed mechanism, it is possible to adjust properly a pressure in the permeation space of the membrane separation unit 10 and a pressure in the degassing unit 20.

During operation, a pressure P₁ (kPa) in the permeation space of the membrane separation unit 10 is reduced to have a value lower than that of a pressure P₂ (kPa) in the degassing unit 20. That is, the pressure in the permeation space of the membrane separation unit 10 and the pressure in the degassing unit 20 are adjusted so that P₁/P₂ < 1 is satisfied during operation. The pressure adjustment (decompression) can be carried out by the first decompression unit 15 and the second decompression unit 25. The pressure in the permeation space of the membrane separation unit 10 and the pressure in the degassing unit 20 may be adjusted so that P₁/P₂ < 1, preferably P₁/P₂ < 0.5, more preferably P₁/P₂ < 0.1, and still more preferably P₁/P₂ < 0.05 is satisfied during operation. Note that in the case where the degassing unit 20 includes the later-described degassing membrane 21, the degassing unit 20 has a gaseous space through which the gas G separated from the fermented liquid S₀ flows and a liquid space, and "the pressure P₂ in the degassing unit 20" refers to a pressure in the gaseous space.

The pressure P₁ preferably satisfies 0 kPa < P₁ ≤ 20 kPa, and more preferably 0 kPa < P₁ ≤ 5 kPa. The pressure P₂ preferably satisfies 2 kPa ≤ P₂ ≤ 90 kPa, and more preferably 10 kPa ≤ P₂ ≤ 90 kPa.

The membrane separation system 100 further includes a tank 30 in addition to the degassing unit 20 and the membrane separation unit 10. The tank 30 stores the fermented liquid S₀ to be supplied to the degassing unit 20. The tank 30 may be a fermenter for generating the organic compound C by fermentation of a carbon source by a microorganism.

The membrane separation system 100 further includes the condensation unit 40. The condensation unit 40 cools and condenses the permeated fluid S₁ that is a gaseous matter and has been delivered from the membrane separation unit 10. The condensation unit 40 liquefies the permeated fluid S₁ that is a gaseous matter, so that the permeated fluid S₁ that is a liquid is obtained. The condensation unit 40 is, for example, a gas-liquid heat exchanger that causes heat exchange between a cooling medium, such as an antifreeze, and the permeated fluid S₁ that is a gaseous matter.

The membrane separation system 100 further includes a first fermented liquid feed passage 91, a second fermented liquid feed passage 92, a non-permeated fluid discharge passage 93, a first permeated fluid discharge passage 94, and a second permeated fluid discharge passage 95 each serving as a passage for a fluid.

The first fermented liquid feed passage 91 is a passage for supplying the fermented liquid S₀ from the tank 30 to the degassing unit 20 during operation, and is connected to an outlet 30b of the tank 30 and a fermented liquid inlet 23a of the degassing unit 20. The second fermented liquid feed passage 92 is a passage for supplying the fermented liquid S from which the gas G has been separated from the degassing unit 20 to the membrane separation unit 10 during operation, and is connected to a fermented liquid outlet 23b of the degassing unit 20 and a feed space inlet 13a of the membrane separation unit 10.

The non-permeated fluid discharge passage 93 is a passage for discharging the non-permeated fluid S₂ from the membrane separation unit 10 during operation, and is connected to a feed space outlet 13b of the membrane separation unit 10. The non-permeated fluid discharge passage 93 may be provided, for example, with a pump that controls a flow rate of the non-permeated fluid S₂. The non-permeated fluid discharge passage 93 may not be provided with a pump.

The non-permeated fluid discharge passage 93 may be connected to an inlet 30a of the tank 30 and configured to deliver the non-permeated fluid S₂ to the tank 30 during operation. That is, the membrane separation system 100 may have a configuration in which the non-permeated fluid S₂ and the fermented liquid S₀ are mixed in the tank 30 and circulate through the first fermented liquid feed passage 91, the second fermented liquid feed passage 92, and the non-permeated fluid discharge passage 93 during operation. In the case where the non-permeated fluid S₂ is delivered to the tank 30, the fermented liquid S₀ is mixed with the non-permeated fluid S₂ and a content of the organic compound C in the fermented liquid S₀ decreases in the tank 30. In the case where the tank 30 is a fermenter, a decrease in the content of the organic compound C in the fermented liquid S₀ can inhibit the fermentation by the microorganism from stopping, thereby making it possible to produce a fermented product continuously.

The first permeated fluid discharge passage 94 is a passage for discharging the permeated fluid S₁ that is a gaseous matter from the membrane separation unit 10 during operation, and is connected to a permeation space outlet 14b of the membrane separation unit 10 and a permeated fluid inlet 40a of the condensation unit 40. The second permeated fluid discharge passage 95 is a passage for discharging the permeated fluid S₁ that is a liquid from the condensation unit 40 during operation, and is connected to a permeated fluid outlet 40b of the condensation unit 40.

The membrane separation system 100 may further include a recovery unit 50. The recovery unit 50 recovers the permeated fluid S₁ that is a liquid and that has been delivered from the condensation unit 40 and can, for example, store the permeated fluid S₁ that is a liquid. The recovery unit 50 is, for example, a tank that stores the permeated fluid S₁ that is a liquid. In this case, the second permeated fluid discharge passage 95 is connected to an inlet 50a of the recovery unit 50.

The membrane separation system 100 further includes a first discharge passage 96 and a second discharge passage 97 each serving as a passage for a fluid.

The first discharge passage 96 is connected to a gaseous emission outlet 40c of the condensation unit 40. The first discharge passage 96 is provided with the first decompression unit 15. The first decompression unit 15 can decompress the inside of the permeation space of the membrane separation unit 10 as well as an inside of the condensation unit 40. Preferably, the first decompression unit 15 is a vacuum device such as a vacuum pump.

The second discharge passage 97 is a passage for releasing the gas G separated in the degassing unit 20 from the degassing unit 20 to an outside of the degassing unit 20 during operation, and is connected to a gaseous emission outlet 24b of the degassing unit 20. The second discharge passage 97 is provided with the second decompression unit 25. The second decompression unit 25 can decompress the inside of the degassing unit 20. Preferably, the second decompression unit 25 is a vacuum device such as a vacuum pump.

The membrane separation system 100 may further include a control unit 60 that controls each member of the membrane separation system 100. The control unit 60 is, for example, a DSP (Digital Signal Processor) including an A/D conversion circuit, an input/output circuit, an arithmetic circuit, a storage device, etc. A program for operating properly the membrane separation system 100 is stored in the control unit 60. For example, the control unit 60 can reduce the pressure in the permeation space of the membrane separation unit 10 to have a value lower than that of the pressure in the degassing unit 20 by controlling behaviors of the first decompression unit 15 and the second decompression unit 25.

Each passage of the membrane separation system 100 is composed of, for example, a metal or resin pipe unless otherwise noted.

The membrane separation system 100 may further include, at a position preceding the degassing unit 20, an additional separation unit (not shown in FIG. 1) that separates the microorganism from the fermented liquid S₀. Such a configuration makes it possible, for example, to suppress clogging of the later-described degassing membrane 21 in the case where the degassing unit 20 includes the degassing membrane 21.

Next, the membrane separation unit 10 and the degassing unit 20 included in the membrane separation system 100 of the present embodiment will be described in further detail.

### [Membrane separation unit]

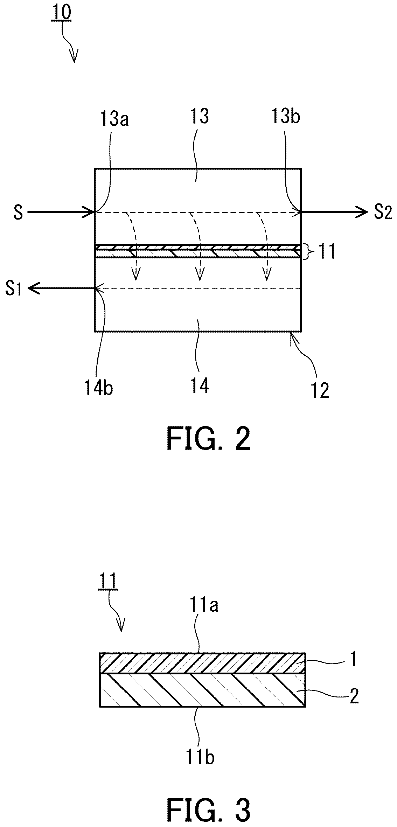

FIG. 2 is a schematic cross-sectional view showing an example of the membrane separation unit 10. As shown in FIG. 2, the membrane separation unit 10 includes a pervaporation membrane 11 and a container 12. The container 12 has a first chamber 13 and a second chamber 14. The first chamber 13 functions as the feed space to which the fermented liquid S is supplied. The second chamber 14 functions as the permeation space to which the permeated fluid S₁ is supplied. The permeated fluid S₁ is obtained by allowing the fermented liquid S to permeate through the pervaporation membrane 11.

The pervaporation membrane 11 is disposed in the container 12. In the container 12, the pervaporation membrane 11 separates the first chamber 13 and the second chamber 14 from each other. The pervaporation membrane 11 extends from one of a pair of wall surfaces of the container 12 to the other.

The first chamber 13 has the feed space inlet 13a and the feed space outlet 13b. The second chamber 14 has the permeation space outlet 14b. The feed space inlet 13a is an opening for supplying the fermented liquid S to the feed space (the first chamber 13). The permeation space outlet 14b is an opening for discharging the permeated fluid S₁ from the permeation space (the second chamber 14). The feed space outlet 13b is an opening for discharging, from the feed space (the first chamber 13), the fermented liquid S (the non-permeated fluid S₂) not having permeated through the pervaporation membrane 11. The feed space inlet 13a, the feed space outlet 13b, and the permeation space outlet 14b are formed, for example, in wall surfaces of the container 12.

The membrane separation unit 10 is suitable for a flow-type (continuous-type) membrane separation method. However, the membrane separation unit 10 may be used for a batch-type membrane separation method.

### (Pervaporation membrane)

As described above, the pervaporation membrane 11 is typically a membrane (a separation membrane) that allows the organic compound C contained in the fermented liquid S to preferentially permeate therethrough. The pervaporation membrane 11 allows the permeated fluid S₁ that is a gaseous matter and contains the organic compound C to be generated by a pervaporation method, for example.

As shown in FIG. 3, the pervaporation membrane 11 includes, for example, a separation functional layer 1 and a porous support member 2 supporting the separation functional layer 1. The pervaporation membrane 11 may further include a protective layer (not shown) that protects the separation functional layer 1. The separation functional layer 1 is in direct contact with the porous support member 2, for example. For example, the pervaporation membrane 11 has a principal surface 11a, on the separation functional layer side, that is exposed to the first chamber 13 and a principal surface 11b, on the porous support member side, that is exposed to the second chamber 14.

### (Separation functional layer)

The separation functional layer 1 is typically a layer that allows the organic compound C contained in the fermented liquid S to preferentially permeate therethrough. The separation functional layer 1 includes a hydrophobic material, for example. In the present description, the term "hydrophobic material" refers to, for example, a material that has a static contact angle exceeding 90° with respect to water when a 10 µL drop of the water (temperature 25°C) is dropped on a surface of a specimen composed of the material. Note that the static contact angle with respect to water can be measured using a commercially available contact angle meter.

Examples of the hydrophobic material include a compound having a siloxane bond (a Si-O-Si bond), an olefin-based polymer, an oil, and a fluorine-based compound. The separation functional layer 1 preferably includes a compound having a siloxane bond as the hydrophobic material. The compound having a siloxane bond is typically a silicone-based polymer. The silicone-based polymer may be a solid or a liquid at 25°C. Specific examples of the silicone-based polymer include polydimethylsiloxane (PDMS). Specific examples of the olefin-based polymer include polyethylene and polypropylene. Examples of the oil include a hydrocarbon-based oil such as liquid paraffin. Examples of the fluorine-based compound include polytetrafluoroethylene (PTFE), polyvinylidene fluoride (PVDF), and tetrafluoroethylene-perfluoroalkyl vinyl ether copolymer (PFA). These hydrophobic materials can be used alone or two or more of them can be used in combination.

The separation functional layer 1 may include the hydrophobic material as a main component, or may be composed substantially of the hydrophobic material alone. The term "main component" means a component having a largest content in the separation functional layer 1 in terms of weight ratio.

The separation functional layer 1 may include a matrix including the hydrophobic material and a filler dispersed in the matrix. The filler is buried in the matrix. In the matrix, all particles of the filler may be spaced from each other or may aggregate partially.

The filler includes, for example, an inorganic material such as zeolite, silica, or bentonite. The zeolite included in the filler is preferably a high-silica zeolite having a high ratio of silica with respect to alumina. Having high resistance to hydrolysis, the high-silica zeolite is suitably used for separating the fermented liquid S. Examples of the high-silica zeolite to be used include HSZ (registered trademark) available from Tosoh Corporation, HiSiv (registered trademark) available from UNION SHOWA K.K., USKY available from UNION SHOWA K.K., and Zeoal (registered trademark) available from Nakamura Choukou Co., Ltd.

The filler may include a metal organic framework (MOF). The metal organic framework is also referred to as a porous coordination polymer (PCP). The metal organic framework is preferably hydrophobic. The metal organic framework includes a metal ion and an organic ligand, for example. Examples of the metal ion include a Zn ion. The organic ligand includes an aromatic ring, for example. Examples of the aromatic ring included in the organic ligand include an imidazole ring. Examples of the organic ligand include 2-methylimidazole. Specific examples of the metal organic framework include ZIF-8.

The filler is in the form of particles, for example. The term "form of particles" herein includes spherical, elliptical, flaky, and fibrous forms. An average particle diameter of the filler is, for example, but not particularly limited to, 50 µm or less, preferably 20 µm or less, and more preferably 10 µm or less. The lower limit of the average particle diameter of the filler is 0.01 µm, for example. The average particle diameter of the filler can be determined by the following method, for example. First, a cross-section of the separation functional layer 1 is observed using a transmission electron microscope. The area of a specific particle of the filler on the resulting electron microscope image is calculated by image processing. The diameter of a circle having the same area as the calculated area is regarded as the particle diameter (the diameter of the particle) of the specific filler particle. The particle diameter is calculated for any number (at least 50) of the filler particles, and the average of the calculated values is regarded as the average particle diameter of the filler.

A content of the filler in the separation functional layer 1 is, for example, 10 wt% or more, preferably 30 wt% or more, and more preferably 40 wt% or more. The upper limit of the content of the filler in the separation functional layer 1 is, for example, but not particularly limited to, 70 wt%. A content of the matrix in the separation functional layer 1 is, for example, but not particularly limited to, 30 wt% to 90 wt%.

The separation functional layer 1 has a thickness of, for example, 200 µm or less, preferably 100 µm or less, and more preferably 80 µm or less. The separation functional layer 1 may have a thickness of 1.0 µm or more, 10 µm or more, or 30 µm or more.

The separation functional layer 1 may have a microporous structure with an average pore diameter of less than 0.01 µm, but may be a dense layer having no pore on its surface.

### (Porous support member)

Examples of the porous support member 2 include: a nonwoven fabric; porous polytetrafluoroethylene; aromatic polyamide fiber; a porous metal; a sintered metal; porous ceramic; porous polyester; porous nylon; activated carbon fiber; latex; silicone; silicone rubber; a permeable (porous) polymer including at least one selected from the group consisting of polyvinyl fluoride, polyvinylidene fluoride, polyurethane, polypropylene, polyethylene, polystyrene, polycarbonate, polysulfone, polyether ether ketone, polyacrylonitrile, polyimide, and polyphenylene oxide; a metallic foam having an open cell or a closed cell; a polymer foam having an open cell or a closed cell; silica; a porous glass; and a mesh screen. The porous support member 2 may be a combination of two or more of these materials.

The porous support member 2 has an average pore diameter of 0.01 to 0.4 µm, for example. A thickness of the porous support 2 is, for example, but not particularly limited to, 10 µm or more, preferably 50 µm or more, and more preferably 100 µm or more. The thickness of the porous support 2 is, for example, 300 µm or less, and preferably 200 µm or less.

### (Protective layer)

The protective layer covers a surface of the separation functional layer 1, for example. A material of the protective layer is, for example, but not particularly limited to, a silicone resin. The material of the protective layer may be identical to that of the matrix of the separation functional layer 1. A thickness of the protective layer is, for example, but not particularly limited to, 0.5 µm or more, preferably 1 µm or more, more preferably 5 µm or more, and still more preferably 10 µm or more. The thickness of the protective layer is, for example, 100 µm or less, preferably 50 µm or less, and more preferably 30 µm or less.

### (Method for producing pervaporation membrane)

The pervaporation membrane 11 can be produced by, for example, forming the separation functional layer 1 on the porous support member 2. Specifically, a coating liquid containing the materials of the separation functional layer 1 is prepared first. The coating liquid may contain, in addition to the filler, a dispersant for dispersing the filler in the coating liquid. In the case where the coating liquid contains the compound having a siloxane bond, the coating liquid may further contain a catalyst for curing the compound. Next, the coating liquid is applied onto the porous support 2 to obtain a coating. The coating is dried to obtain the separation functional layer 1.

### [Degassing unit]

A configuration of the degassing unit 20 is not particularly limited as long as the degassing unit 20 can separate the gas G dissolved in the fermented liquid S₀ from the fermented liquid S₀. The degassing unit 20 may have a configuration that adopts a decompression method, or may have a configuration that adopts a heating method. The degassing unit 20 may have a configuration that adopts both a decompression method and a heating method. As the decompression method, there can be mentioned, for example, a method that uses a degassing membrane, and a method that does not use a degassing membrane. The method that uses a degassing membrane is a method that separates a gaseous matter dissolved in a liquid by permeation of the gaseous matter through the degassing membrane. The method that does not use a degassing membrane is a method that separates a gaseous matter dissolved in a liquid by decompressing an inside of a space in which the liquid is present. The heating method is a method that separates a gaseous matter from a liquid by raising a temperature of the liquid in a degassing tower and thus reducing solubility of the gaseous matter dissolved in the liquid.

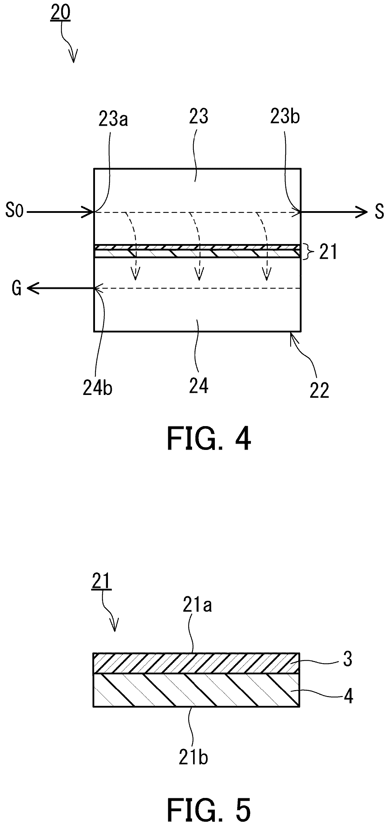

FIG. 4 is a schematic cross-sectional view showing an example of the degassing unit 20. As shown in FIG. 4, the degassing unit 20 may have a degassing membrane 21 that separates the gas G from the fermented liquid S₀. That is, the degassing unit 20 may have a configuration that adopts the decompression method that uses a degassing membrane.

The degassing unit 20 shown in FIG. 4 includes the degassing membrane 21 and a container 22. The container 22 has a first chamber 23 and a second chamber 24. The first chamber 23 functions as the liquid space. The fermented liquid S₀ is supplied to the liquid space, and the fermented liquid S from which the gas G has been separated flows through the liquid space. The second chamber 24 functions as the gaseous space through which the gas G separated from the fermented liquid S₀ flows. The fermented liquid S is obtained by allowing the fermented liquid S₀ to permeate through the degassing membrane 21.

The degassing membrane 21 is disposed in the container 22. In the container 22, the degassing membrane 21 separates the first chamber 23 and the second chamber 24 from each other. The degassing membrane 21 extends from one of a pair of wall surfaces of the container 22 to the other.

The first chamber 23 has a liquid space inlet 23a and a liquid space outlet 23b. The second chamber 24 has a gaseous space outlet 24b. The liquid space inlet 23a is an opening for supplying the fermented liquid S₀ to the liquid space (the first chamber 23). The gaseous space outlet 24b is an opening for discharging the gas G from the gaseous space (the second chamber 24). The liquid space outlet 23b is an opening for discharging from the liquid space (the first chamber 23) the fermented liquid S from which the gas G has been separated. The liquid space inlet 23a, the liquid space outlet 23b, and the gaseous space outlet 24b are formed, for example, in wall surfaces of the container 22.

### (Degassing membrane)

As described above, the degassing membrane 21 is typically a membrane (a separation membrane) that allows the gas G dissolved in the fermented liquid S₀ to preferentially permeate therethrough. Decompressing an inside of the second chamber 24, for example, allows only the gas G dissolved in the fermented liquid S₀ supplied to the first chamber 23 to permeate through the degassing membrane 21 into the second chamber 24. Thereby, the fermented liquid S from which the gas G has been separated is obtained.

As shown in FIG. 5, the degassing membrane 21 includes, for example, a separation functional layer 3 and a porous support member 4 supporting the separation functional layer 3. The degassing membrane 21 may further include a protective layer (not shown) that protects the separation functional layer 3. The separation functional layer 3 is in direct contact with the porous support member 4, for example. For example, the degassing membrane 21 has a principal surface 21a, on the separation functional layer side, that is exposed to the first chamber 23 and a principal surface 21b, on the porous support member side, that is exposed to the second chamber 24.

### (Separation functional layer)

The separation functional layer 3 is typically a layer that allows the gas G contained in the fermented liquid S₀ to preferentially permeate therethrough. The separation functional layer 3 includes a hydrophobic material, for example. As the hydrophobic material, the hydrophobic material described for the separation functional layer 1 of the pervaporation membrane 11 can be used.

Like the separation functional layer 1 of the pervaporation membrane 11, the separation functional layer 3 may include the hydrophobic material as a main component, or may be composed substantially of the hydrophobic material alone.

Like the separation functional layer 1 of the pervaporation membrane 11, the separation functional layer 3 may include a matrix including the hydrophobic material and a filler dispersed in the matrix. As the filler, the filler described for the separation functional layer 1 of the pervaporation membrane 11 can be used.

The separation functional layer 3 may have a thickness comparable to that of the separation functional layer 1 of the pervaporation membrane 11.

The separation functional layer 3 may have a microporous structure with an average pore diameter of less than 0.01 µm, but may be a dense layer having no pore on its surface.

### (Porous support member)

As a material of the porous support member 4, the material described for the porous support member 2 of the pervaporation membrane 11 can be used.

### (Protective layer)

The protective layer covers a surface of the separation functional layer 3, for example. As a material of the protective layer, the material described for the protective layer of the pervaporation membrane 11 can be used.

A material which the degassing membrane 21 is composed of may be identical to a material which the pervaporation membrane 11 is composed of. The degassing membrane 21 may have a structure identical to that of the pervaporation membrane 11 except for its membrane area and the thickness of each layer.

### (Method for producing degassing membrane)

The degassing membrane 21 can be produced by, for example, forming the separation functional layer 3 on the porous support member 4. The degassing membrane 21 can be produced by the same method as the above-mentioned method for producing the pervaporation membrane 11.

### <Embodiment of method for operating membrane separation system>

A method for operating the membrane separation system 100 includes: degassing the fermented liquid S₀ containing the volatile organic compound C and the gas G with the degassing unit 20 (step 1); and separating the liquid S having been degassed into the permeated fluid S₁ and the non-permeated fluid S₂ with the pervaporation membrane of the membrane separation unit 10 (step 2).

As described above, the fermented liquid S₀ contains the volatile organic compound C as well as the microorganism that generates the organic compound C. The fermented liquid S₀ contains, for example, water other than the organic compound C, the microorganism, and the gas G. The fermented liquid S₀ is typically an aqueous solution containing the organic compound C, the microorganism, and the gas G.

The organic compound C contained in the fermented liquid S₀ is not particularly limited as long as the organic compound C has volatility. In the present description, the term "organic compound having volatility" refers to, for example, an organic compound that has a boiling point of 20°C to 260°C under an atmospheric pressure (101.325 kPa). Note that the organic compound C allows, for example, an aqueous phase containing water as a main component and an organic phase having a content of the organic compound C higher than that in the aqueous phase to be generated when a concentration of the organic compound C is high in the aqueous solution.

The number of carbon atoms in the organic compound C is, for example, but not particularly limited to, 10 or less, and may be 8 or less, 6 or less, or even 4 or less. The lower limit of the number of carbon atoms in the organic compound C may be 1 or 2. The organic compound C has, for example, a functional group including an oxygen atom, such as a hydroxyl group, a carbonyl group, an ether group, and an ester group. In the organic compound C, the number of the functional groups including an oxygen atom is typically one.

Examples of the organic compound C include an alcohol, ketone, and ester, and preferred is an alcohol. In the case where the organic compound C is an alcohol, the organic compound C is likely to be compatible with water and thus unlikely to cause unevenness in an environment in its system. The alcohol may be an alkyl alcohol composed only of an alkyl group and a hydroxyl group, or may be an aryl alcohol including an aryl group and a hydroxyl group. The alkyl alcohol may be linear, branched, or cyclic. Examples of the alkyl alcohol include methanol, ethanol, n-propanol, isopropanol, n-butanol, 2-butanol, isobutanol, t-butanol, and n-pentanol, and preferred is n-butanol. N-butanol is a compound that allows two phases (an aqueous phase and an organic phase) to be generated from an aqueous solution thereof when a content of the compound in the aqueous solution is around 8 wt% or more. Therefore, in the case where the organic compound C is n-butanol, it is possible, by adjusting the content of the organic compound C in the permeated fluid S₁ to be around 8 wt% or more, for example, to generate an aqueous phase and an organic phase in the permeated fluid S₁ after the permeated fluid S₁ is liquefied. In this case, it is possible to refine the permeated fluid S₁ easily by separating the aqueous phase and the organic phase from each other. Examples of the aryl alcohol include phenol.

The ketone may be dialkylketone composed only of an alkyl group and a carbonyl group. Examples of the dialkylketone include methyl ethyl ketone (MEK) and acetone.

The ester may be aliphatic alkylester composed only of an alkyl group and an ester group. Examples of the aliphatic alkylester include ethyl acetate.

Note that the organic compound C is not limited to those mentioned above. The organic compound C may be aromatic hydrocarbon such as benzene, toluene, or xylene.

The fermented liquid S₀ may contain one kind of the organic compound C, or two or more kinds of the organic compounds C. The content of the organic compound C in the fermented liquid S₀ is, for example, 50 wt% or less, and may be 30 wt% or less, 10 wt% or less, 5 wt% or less, 2 wt% or less, or even 1 wt% or less. The lower limit of the content of the organic compound C is, for example, but not particularly limited to, 0.01 wt%.

The organic compound C is a fermented product generated by fermentation of a carbon source by a microorganism, and is preferably an alcohol (a bioalcohol) generated by a microorganism.

The fermented liquid S₀ may further contain an additional component, such as a carbon source, a nitrogen source, or an inorganic ion, other than the water, the organic compound C, the microorganism, and the gas G. Examples of the carbon source include polysaccharides such as starch, and monosaccharides such as glucose.

A specific method for executing the step 1 will be described by referring to the degassing unit 20 shown in FIG. 4 as an example. In the step 1, the fermented liquid S₀ is first supplied to the first chamber 23 of the degassing unit 20 via the liquid space inlet 23a. This makes it possible to bring the fermented liquid S₀ into contact with one surface (the principal surface 21a, for example) of the degassing membrane 21.

Next, in a state in which the fermented liquid S₀ is in contact with the one surface of the degassing membrane 21, a space adjacent to another surface (the principal surface 21b, for example) of the degassing membrane 21 is decompressed. Specifically, the inside of the second chamber 24 is decompressed via the gaseous space outlet 24b. The inside of the second chamber 24 can be decompressed by the second decompression unit 25. A pressure in the second chamber 24 is, for example, 40 kPa or less, and may be 25 kPa or less, 1 kPa or less, or 6 kPa or less. In the present description, the term "pressure" means an absolute pressure unless otherwise noted.

Decompressing the inside of the second chamber 24 makes it possible to obtain, on the side of the other surface of the degassing membrane 21, the gas G separated from the fermented liquid S₀. In other words, the gas G is supplied to the second chamber 24. The gas G is discharged to the outside of the degassing unit 20 via the gaseous space outlet 24b. The gas G joins a gaseous emission from the second decompression unit 25 in the second discharge passage 97.

On the other hand, a content of the gas G dissolved in the fermented liquid S₀ gradually decreases from the liquid space inlet 23a to the liquid space outlet 23b in the first chamber 23. The fermented liquid S₀ (the fermented liquid S) processed in the first chamber 23 is discharged to the outside of the degassing unit 20 via the liquid space outlet 23b. The fermented liquid S passes through the second feed passage 92 and is supplied to the membrane separation unit 10 via the feed space inlet 13a.

As described above, a gas, such as carbon dioxide, is present in the fermented liquid S₀ as the dissolved gas G. In the step 1, it is possible to separate the gas G dissolved in the fermented liquid S₀ from the fermented liquid S₀ by the degassing unit 20. Accordingly, the fermented liquid S obtained by operation of the degassing unit 20 has a content of the dissolved gas G lower than that in the fermented liquid S₀ supplied to the degassing unit 20. A ratio of the content (wt%) of the gas G in the fermented liquid S with respect to the content (wt%) of the gas G in the fermented liquid S₀ is not particularly limited.

The step 1 makes it possible to produce the fermented liquid S having a decreased content of the dissolved gas G, thereby making it possible to suppress a decrease in the condensation efficiency of the condensation unit 40 in the later-described step 3. As a result, the efficiency in recovering the organic compound C is improved.

A specific method for executing the step 2 will be described by referring to the membrane separation unit 10 shown in FIG. 2 as an example. In the step 2, the fermented liquid S is first supplied to the first chamber 13 of the membrane separation unit 10 via the feed space inlet 13a. This makes it possible to bring the fermented liquid S into contact with one surface (the principal surface 11a, for example) of the pervaporation membrane 11.

Next, in a state in which the fermented liquid S is in contact with the one surface of the pervaporation membrane 11, a space adjacent to another surface (the principal surface 11b, for example) of the pervaporation membrane 11 is decompressed. Specifically, an inside of the second chamber 14 is decompressed via the permeation space outlet 14b. The inside of the second chamber 14 can be decompressed by the first decompression unit 15. A pressure in the second chamber 14 is, for example, 50 kPa or less, and may be 20 kPa or less, 10 kPa or less, 5 kPa or less, 3 kPa or less, or even 2 kPa or less.

Decompressing the inside of the second chamber 14 makes it possible to obtain, on the side of the other surface of the pervaporation membrane 11, the permeated fluid S₁ having a high content of the organic compound C. In other words, the permeated fluid S₁ is supplied to the second chamber 14. In the second chamber 14, the permeated fluid S₁ is typically a gaseous matter. The permeated fluid S₁ is discharged to an outside of the membrane separation unit 10 via the permeation space outlet 14b. The permeated fluid S₁ passes through the first permeated fluid discharge passage 94 and is supplied to the condensation unit 40 via the permeated fluid inlet 40a.

On the other hand, the content of the organic compound C in the fermented liquid S gradually decreases from the feed space inlet 13a to the feed space outlet 13b in the first chamber 13. The fermented liquid S (the non-permeated fluid S₂) processed in the first chamber 13 is discharged to the outside of the membrane separation unit 10 via the feed space outlet 13b. The non-permeated fluid S₂ is typically a liquid. The non-permeated fluid S₂ passes through the non-permeated fluid discharge passage 93 and is supplied to the tank 30 via the inlet 30a.

In the step 2, the pervaporation membrane 11 of the membrane separation unit 10 allows the organic compound C contained in the fermented liquid S to preferentially permeate therethrough. Accordingly, the permeated fluid S₁ obtained by operation of the membrane separation unit 10 has a content of the organic compound C higher than that in the fermented liquid S supplied to the membrane separation unit 10. A ratio of the content (wt%) of the organic compound C in the permeated fluid S₁ with respect to the content (wt%) of the organic compound C in the fermented liquid S is not particularly limited.

The step 2 makes it possible, for example, to produce the permeated fluid S₁ having a high content of the organic compound C. In other words, the step 2 makes it possible to obtain the organic compound C as the permeated fluid S₁.

The steps 1 and 2 further include reducing, during operation, the pressure in the permeation space of the membrane separation unit 10 so that the pressure in the permeation space of the membrane separation unit 10 has a value lower than that of the pressure in the gaseous space of the degassing unit 20. For example, it is possible to reduce the pressure in the permeation space of the membrane separation unit 10 to have a value lower than that of the pressure in the gaseous space of the degassing unit 20 by allowing the control unit 60 to control behaviors of the first decompression unit 15 and the second decompression unit 25.

The method for operating the membrane separation system 100 further includes cooling and condensing the permeated fluid S₁ that is a gaseous matter by the condensation unit 40 (step 3). The step 3 makes it possible to liquefy the permeated fluid S₁ that is a gaseous matter so as to obtain the permeated fluid S₁ that is a liquid.

### <Embodiment of method for producing organic compound>

A method for producing an organic compound of the present embodiment includes: degassing the fermented liquid S₀ containing the volatile organic compound C and the gas G; separating the fermented liquid S having been degassed into the permeated fluid S₁ and the non-permeated fluid S₂; and recovering the permeated fluid S₁. The method for producing an organic compound of the present embodiment may be performed using the above-mentioned membrane separation system 100.

In the method for producing an organic compound of the present embodiment, the organic compound C may be an alcohol. The method for producing an organic compound of the present embodiment makes it possible to efficiently separate the alcohol from the fermented liquid S₀ containing a volatile alcohol.

### [Modification of membrane separation unit]

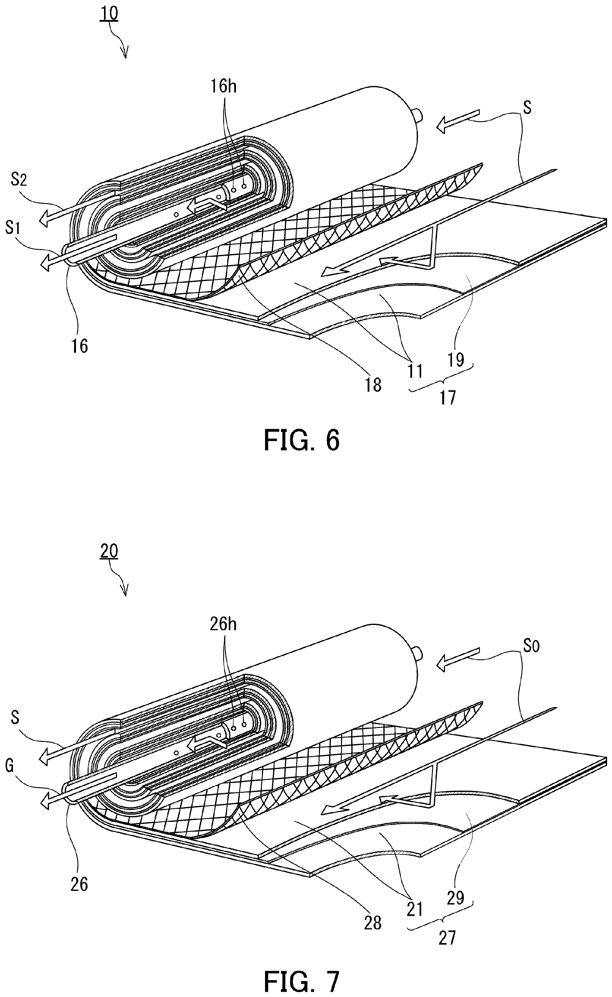

The membrane separation unit 10 may be a spiral membrane element, a hollow fiber membrane element, a disk tube membrane element in which a plurality of pervaporation membranes are laminated, a plate-and-frame membrane element, or the like. FIG. 6 is a developed perspective view showing schematically a spiral membrane element. The membrane separation unit 10 may be a spiral membrane element as shown in FIG. 6. The membrane separation unit 10 (the membrane element) in FIG. 6 includes a central tube 16, and a membrane leaf 17 that has the pervaporation membrane 11 and is wound around the central tube 16.

The central tube 16 has a cylindrical shape. The central tube 16 has a surface with a through hole 16h formed therein to allow the permeated fluid S₁ to flow into the central tube 16. The number of the through holes 16h is not particularly limited and may be one, or two or more. Examples of a material of the central tube 16 include: a resin such as an acrylonitrile-butadiene-styrene copolymer resin (an ABS resin), a polyphenylene ether resin (a PPE resin), or a polysulfone resin (a PSF resin); and a metal such as stainless steel or titanium. The central tube 16 has an inner diameter in a range of, for example, 20 to 100 mm.

The membrane separation unit 10 has a plurality of the membrane leaves 17. Each of the membrane leaves 17 includes the pervaporation membrane 11 and a permeation-side flow passage material 19. For example, each of the membrane leaves 17 has two pieces of the pervaporation membranes 11. The two pieces of the pervaporation membranes 11 are stacked with each other and sealed on three sides in such a manner as to have a bag-like structure. The permeation-side flow passage material 19 is disposed between the two pieces of the pervaporation membranes 11 in such a manner as to be positioned inside the bag-like structure. The permeation-side flow passage material 19 secures, between the two pieces of the pervaporation membranes 11, a space (the permeation space) serving as a flow passage for the permeated fluid S₁. As just described above, the permeation-side flow passage material 19 is combined with the pervaporation membrane 11 and used. The number of the membrane leaves 17 is, for example, but not particularly limited to, 2 to 30.

The membrane separation unit 10 further has a feed-side flow passage material 18. The feed-side flow passage material 18 is positioned outside the above-mentioned bag-like structure and is laminated on the membrane leaf 17. Specifically, a plurality of the feed-side flow passage materials 18 and the plurality of the membrane leaves 17 are laminated alternately. The feed-side flow passage material18 secures, between the membrane leaf 17 and the membrane leaf 17, a space (the feed space) serving as a flow passage for the fermented liquid S.

As the feed-side flow passage material 18 and the permeation-side flow passage material 19, a resin net, woven fabric, or knitted fabric composed of polyethylene, polypropylene, polyethylene terephthalate (PET), polyphenylene sulfide (PPS), or an ethylene-chlorotrifluoroethylene copolymer (ECTFE) can be used, for example.

An outer circumferential surface of the membrane element is composed of a shell (not shown) made from a material through which a fluid cannot permeate. The shell may be made from FRP (fiber reinforced plastic). The membrane element may be accommodated in a casing (not shown).

The membrane separation unit 10 (the membrane element) in FIG. 6 can be operated by the following method, for example. First, the fermented liquid S is supplied into an end of the wound membrane leaf 17. A space inside the central tube 16 is decompressed. The decompression can be carried out by the first decompression unit 15. The permeated fluid S₁ having permeated through the pervaporation membrane 11 of the membrane leaf 17 thereby moves into the central tube 16. The permeated fluid S₁ is discharged outside via the central tube 16. The fermented liquid S (the non-permeated fluid S₂) processed by the membrane separation unit 10 is discharged outside from another end of the wound membrane leaf 17.

### [Modification of degassing unit]

The degassing unit 20 may be a spiral membrane element, a hollow fiber membrane element, a disk tube membrane element in which a plurality of pervaporation membranes are laminated, a plate-and-frame membrane element, or the like. The degassing unit 20 may be a spiral membrane element as shown in FIG. 7. The degassing unit 20 (the membrane element) in FIG. 7 has a central tube 26, and a membrane leaf 27 that has the degassing membrane 21 and is wound around the central tube 26.

The central tube 26 has a cylindrical shape. The central tube 26 has a surface with a through hole 26h formed therein to allow the gas G to flow into the central tube 26. The degassing unit 20 has a plurality of the membrane leaves 27. Each of the membrane leaves 27 includes the degassing membrane 21 and a permeation-side flow passage material 29. The degassing unit 20 further has a feed-side flow passage material 28. The spiral membrane element in FIG. 7 has a structure identical to that of the spiral membrane element in FIG. 6, and thus detailed description thereof are omitted.

The degassing unit 20 and the membrane separation unit 10 may be spiral membrane elements that have structures identical to each other except for the membrane area and the thickness of each layer.

The degassing unit 20 (the membrane element) in FIG. 7 can be operated by the following method, for example. First, the fermented liquid S₀ is supplied into an end of the wound membrane leaf 27. A space inside the central tube 26 is decompressed. The decompression can be carried out by the second decompression unit 25. The gas G having permeated through the degassing membrane 21 of the membrane leaf 27 thereby moves into the central tube 26. The gas G is discharged outside via the central tube 26. The fermented liquid S₀ (the fermented liquid S) processed by the degassing unit 20 is discharged outside from another end of the wound membrane leaf 27.

### <Modification of membrane separation system>

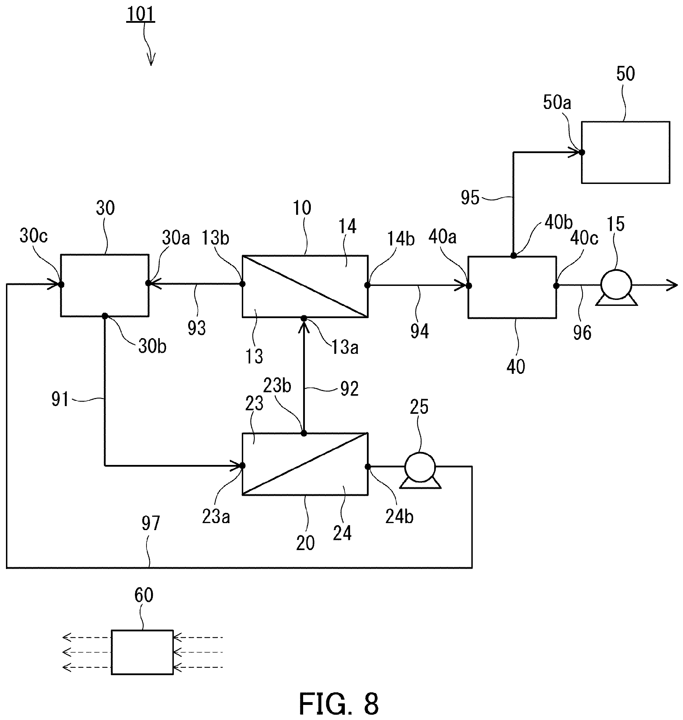

The membrane separation system 100 is not limited to have the configuration mentioned above as long as the membrane separation system 100 includes the degassing unit 20 that degasses the fermented liquid S₀ containing the volatile organic compound C and the gas G, and the membrane separation unit 10 having the pervaporation membrane 11 that separates the fermented liquid S having been degassed into the permeated fluid S₁ and the non-permeated fluid S₂. Hereinafter, Modifications 1 to 5 of the membrane separation system 100 will be described by reference to FIGs. 8 to 13. Note that the elements common with those of the membrane separation system 100 in FIG. 1 are denoted by the same reference numerals, and the detailed descriptions thereof may be omitted.

### [Modification 1 of membrane separation system]

FIG. 8 is a schematic configuration diagram showing Modification 1 of the membrane separation system 100. In a membrane separation system 101 shown in FIG. 8, the degassing unit 20 has the degassing membrane 21 that separates the gas G from the fermented liquid S₀.

In the membrane separation system 101, the second discharge passage 97 is connected to an inlet 30c of the tank 30, and the membrane separation system 101 is configured to deliver the gas G separated in the degassing unit 20 to the tank 30 during operation. That is, the membrane separation system 101 has a configuration in which the gas G and the fermented liquid S₀ are mixed in the tank 30 and circulate through the first fermented liquid feed passage 91 and the second discharge passage 97 during operation. Delivering the gas G to the tank 30 allows the fermented liquid S₀ to be mixed with the gas G in the tank 30. Supplying the gas G into the aqueous solution containing the microorganism makes it possible to accelerate the fermentation by the microorganism.

### [Modification 2 of membrane separation system]

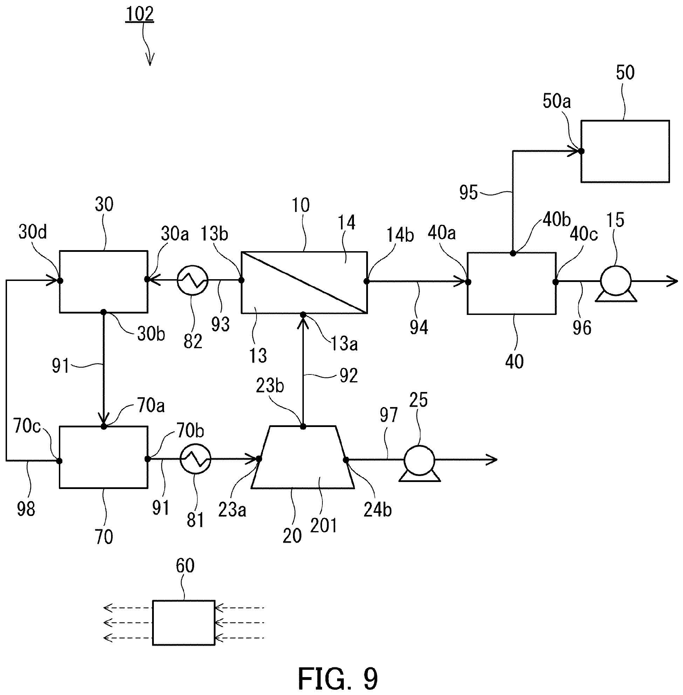

FIG. 9 is a schematic configuration diagram showing Modification 2 of the membrane separation system 100. In a membrane separation system 102 shown in FIG. 9, the degassing unit 20 has a degassing tower 201 that separates the gas G dissolved in the fermented liquid S₀ by the heating method. The degassing tower 201 separates the gas G from the fermented liquid S₀ by raising a temperature of the fermented liquid S₀ in the degassing tower 201 so as to reduce solubility of the gas G dissolved in the fermented liquid S₀.

In the membrane separation system 102, the first fermented liquid feed passage 91 is connected to the outlet 30b of the tank 30 and the fermented liquid inlet 23a of the degassing tower 201. The second fermented liquid feed passage 92 is connected to the fermented liquid outlet 23b of the degassing tower 201 and the feed space inlet 13a of the membrane separation unit 10. The second discharge passage 97 is connected to the gaseous emission outlet 24b of the degassing tower 201. The second discharge passage 97 is connected to the gaseous emission outlet 24b of the degassing tower 201. The second discharge passage 97 may be provided with the second decompression unit 25 that decompresses an inside of the degassing tower 201. That is, the degassing tower 201 may be configured to use both of the decompression method and the heating method.

The membrane separation system 102 may further include, at a position preceding the degassing tower 201, an additional separation unit 70 that separates the microorganism from the fermented liquid S₀. In this case, the separation unit 70 is provided to the first fermented liquid feed passage 91. Such a configuration makes it possible, for example, to supply to the degassing tower 201 the fermented liquid S₀ from which the microorganism has already been separated by the separation unit 70, thereby making it possible to inhibit the microorganism from dying out because of the temperature rise in the degassing tower 201.

The membrane separation system 102 may further include a discharge passage 98 as a fluid passage. The discharge passage 98 is a passage for supplying the microorganism separated in the separation unit 70 to the tank 30, and connects a microorganism discharge outlet 70c of the separation unit 70 to an inlet 30d of the tank 30. That is, the membrane separation system 102 has a configuration in which the microorganism and the fermented liquid S₀ are mixed in the tank 30 and circulate through a part of the first fermented liquid feed passage 91 and the discharge passage 98 during operation. Delivering the microorganism to the tank 30 allows the fermented liquid S₀ to be mixed with the microorganism in the tank 30. Supplying further the microorganism into the aqueous solution containing the microorganism makes it possible to accelerate the fermentation by the microorganism.

The first fermented liquid feed passage 91 may further be provided with, between the separation unit 70 and the degassing tower 201, a heat exchanger 81 for heating the fermented liquid S₀ from which the microorganism has been separated. The gas G may be separated from the fermented liquid S₀ in the degassing tower 201 by supplying to the degassing tower 201 the fermented liquid S₀ having a temperature risen by the heat exchanger 81.

The non-permeated fluid discharge passage 93 may further be provided with, between the membrane separation unit 10 and the tank 30, a heat exchanger 82 for cooling the non-permeated fluid S₂. The heat exchanger 82 can cool the non-permeated fluid S₂ having a temperature risen through a process in the degassing tower 201. This makes it possible to suppress a decrease of the microorganism in the fermented liquid S₀ in the tank 30.

### [Modification 3 of membrane separation system]

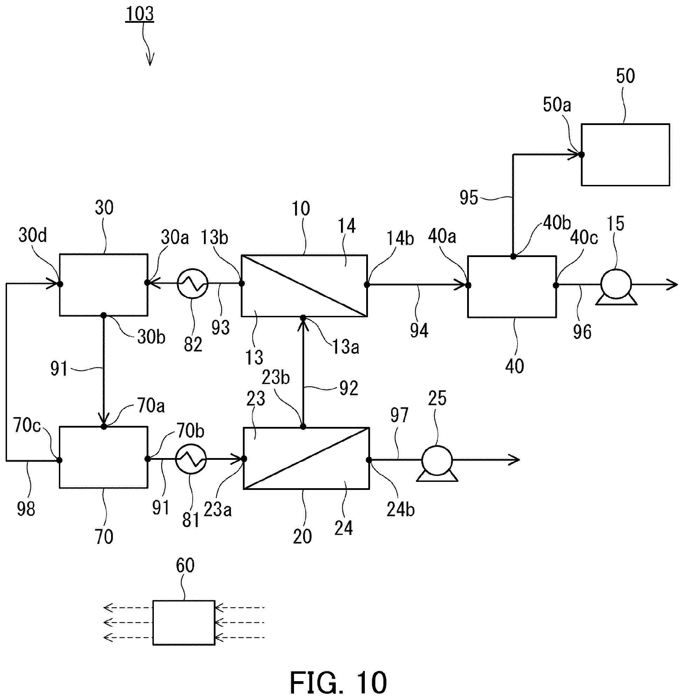

FIG. 10 is a schematic configuration diagram showing Modification 3 of the membrane separation system 100. A membrane separation system 103 shown in FIG. 10 has a configuration identical to that of the membrane separation system 102 shown in FIG. 9, except that the degassing unit 20, instead of the degassing tower 201, has the degassing membrane 21.

The membrane separation system 103 may further include, at a position preceding the degassing unit 20, the additional separation unit 70 that separates the microorganism from the fermented liquid S₀. Such a configuration makes it possible, for example, to suppress clogging of the degassing membrane 21 in the degassing unit 20.

### [Modification 4 of membrane separation system]

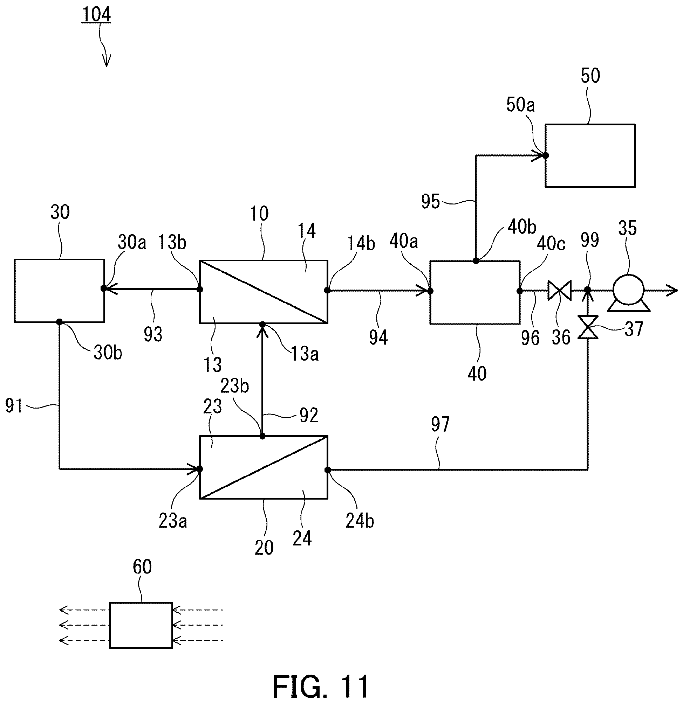

FIG. 11 is a schematic configuration diagram showing Modification 4 of the membrane separation system 100. In a membrane separation system 104 shown in FIG. 11, the degassing unit 20 has the degassing membrane 21 that separates the gas G from the fermented liquid S₀.

The membrane separation system 104 has a configuration identical to that of the membrane separation system 100 shown in FIG. 1, except that the membrane separation system 104 includes a single common decompression device 35 instead of the first decompression unit 15 and the second decompression unit 25. In other words, in the membrane separation system 104, the inside of the permeation space of the membrane separation unit 10 and the inside of the gaseous space of the degassing unit 20 are decompressed by the single common decompression device 35.

The decompression device 35 is provided to the first discharge passage 96. The second discharge passage 97 joins the first discharge passage 96 at a joining point 99 located between the condensation unit 40 and the decompression device 35.

The first discharge passage 96 may be provided with a first pressure regulating valve 36 between the gaseous emission outlet 40c of the condensation unit 40 and the joining point 99. The second discharge passage 97 may be provided with a second pressure regulating valve 37 between the gaseous space outlet 24b of the degassing unit 20 and the joining point 99. The first pressure regulating valve 36 can adjust a degree of the decompression in the permeation space of the membrane separation unit 10. The second pressure regulating valve 37 can adjust a degree of the decompression in the gaseous space of the degassing unit 20.

### [Modification 5 of membrane separation system]

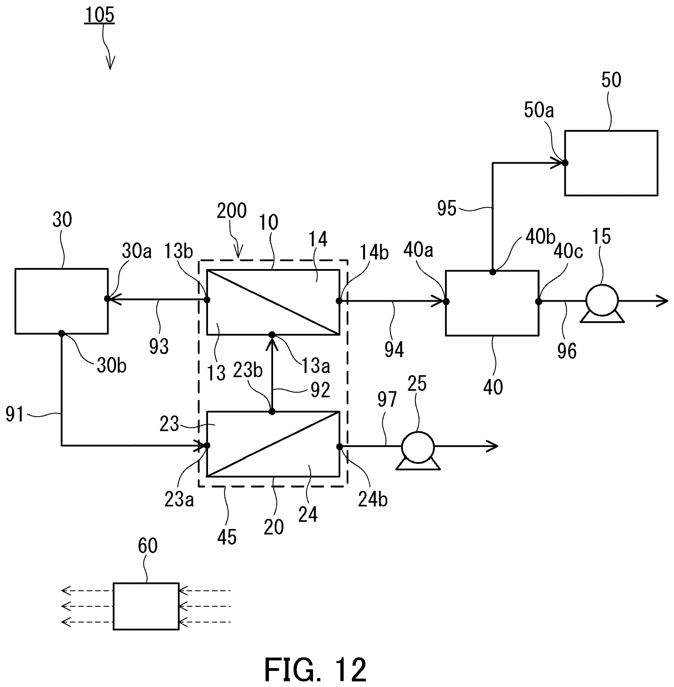

FIG. 12 is a schematic configuration diagram showing Modification 5 of the membrane separation system 100. In a membrane separation system 105 shown in FIG. 12, the degassing unit 20 has the degassing membrane 21.

The membrane separation system 105 has a configuration identical to that of the membrane separation system 100 shown in FIG. 1, except that the membrane separation system 105 further includes a casing 45 that accommodates the degassing unit 20 and the membrane separation unit 10. In other words, the membrane separation system 105 includes a membrane separation device 200 that includes the degassing unit 20, the membrane separation unit 10, and the casing 45 that accommodates the degassing unit 20 and the membrane separation unit 10.

A shape of the casing 45 is not particularly limited as long as the degassing unit 20 and the membrane separation unit 10 can be arranged in series in the membrane separation device 200. The casing 45 may have a prismatic shape or a cylindrical shape, for example.

The casing 45 that accommodates the degassing unit 20 and the membrane separation unit 10 may be placed laterally or vertically. In the case where the casing 45 is placed vertically, the membrane separation unit 10 may be positioned above or below the degassing unit 20.

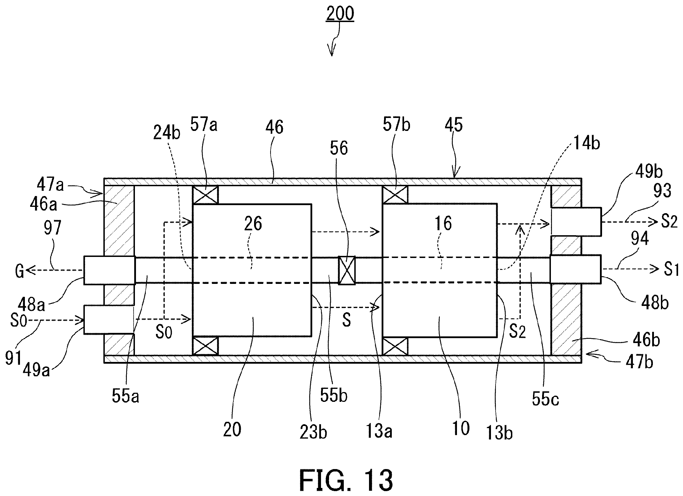

FIG. 13 is a schematic cross-sectional view showing an example of the membrane separation device 200 included in the membrane separation system 105. In the membrane separation device 200, the degassing unit 20 and the membrane separation unit 10 are arranged in series in the casing 45. In the example shown in FIG. 13, the degassing unit 20 and the membrane separation unit 10 each are a spiral membrane element. However, a structure of each of the degassing unit 20 and the membrane separation unit 10 is not limited to a spiral structure.

In the membrane separation system 105, the degassing unit 20 and the membrane separation unit 10 are accommodated in the casing 45 that is a single common casing so as to configure the membrane separation device 200. In this case, the membrane separation device 200 is lighter and more compact than in the case where the degassing unit 20 and the membrane separation unit 10 are accommodated in separate casings. Therefore, the membrane separation system 105 is suitable for a system that is required to be lighter and space-saving. Moreover, the membrane separation device 200 has excellent maintainability because components thereof are replaceable as well.

The casing 45 has a casing main body 46, a first end plate 46a, and a second end plate 46b. The casing main body 46 may have a cylindrical shape and be made from a material having sufficient pressure resistance. A longitudinal direction of the casing main body 46 coincides with a flow direction of a fluid. The first end plate 46a is attached at a first end portion 47a of the casing main body 46. The first end portion 47a of the casing main body 46 is closed with the first end plate 46a. The second end plate 46b is attached at a second end portion 47b of the casing main body 46. The second end portion 47b of the casing main body 46 is closed with the second end plate 46b.

The casing 45 has a port 48a and a port 48b. Each of the port 48a and the port 48b is a port for allowing an inside of the casing 45 to communicate with an outside of the casing 45. The port 48a is provided to the first end plate 46a. The port 48b is provided to the second end plate 46b. The port 48a is a port for guiding the gas G separated in the degassing unit 20. The port 48b is a port for guiding the permeated fluid S₁ separated in the membrane separation unit 10.

The casing 45 further has a port 49a and a port 49b. Each of the port 49a and the port 49b is a port for allowing the inside of the casing 45 to communicate with the outside of the casing 45. The port 49a is provided at the first end portion 47a of the casing main body 46. The port 49b is provided at the second end portion 47b of the casing main body 46. The port 48a is a port for guiding the fermented liquid S₀ to the degassing unit 20. The port 48b is a port for guiding the non-permeated fluid S₂ separated in the membrane separation unit 10. Note that the port 49a may be provided at a side portion, on the first end portion 47a side, of the casing main body 46. The port 49b may be provided at a side portion, on the second end portion 47b side, of the casing main body 46.

Each of the ports 48a, 48b, 49a, and 49b may be a simple opening, or a nozzle-like opening as shown in FIG. 13.

In the casing 45, a first tube 55a, a second tube 55b, and a third tube 55c each extending in a longitudinal direction are provided. One end of the first tube 55a communicates with the central tube 26 of the degassing unit 20. Another end of the first tube 55a communicates with the port 48a. One end of the second tube 55b communicates with the central tube 26 of the degassing unit 20. Another end of the second tube 55b communicates with the central tube 16 of the membrane separation unit 10. One end of the third tube 55c communicates with the central tube 16 of the membrane separation unit 10. Another end of the third tube 55c communicates with the port 48b.

A plug 56 is attached to the second tube 55b. The second tube 55b is blocked with the plug 56 during operation. This makes it possible to adjust separately the pressure in the gaseous space of the degassing unit 20 and the pressure in the permeation space of the membrane separation unit 10. Specifically, it is possible to reduce the pressure in the permeation space of the membrane separation unit 10 to have a value lower than that of the pressure in the gaseous space of the degassing unit 20 by controlling behaviors of the first decompression unit 15 and the second decompression unit 25. Moreover, since the second tube 55b is blocked with the plug 56, flowing of the gas G separated in the degassing unit 20 into the membrane separation unit 10 is avoided during operation.

The membrane separation device 200 further includes a sealing member 57a disposed in a space between the degassing unit 20 and the casing 45, and a sealing member 57b disposed in a space between the membrane separation unit 10 and the casing 45. The sealing members 57a and 57b divide an inner space of the casing 45. For example, the sealing members 57a and 57b each have a ring shape and surround the degassing unit 20 and the membrane separation unit 10 in circumferential directions, respectively. The sealing members 57a and 57b are disposed respectively on one end side of the degassing unit 20 and one end side of the membrane separation unit 10.

The material which the degassing membrane 21 of the degassing unit 20 is composed of is preferably identical to the material which the pervaporation membrane 11 of the membrane separation unit 10 is composed of. In this case, it is possible, for example, to allow the membrane separation device 200 to function as a two-stage membrane separation module by operating the membrane separation device 200 with the plug 56 being opened.

### [Modification 6 of membrane separation system]

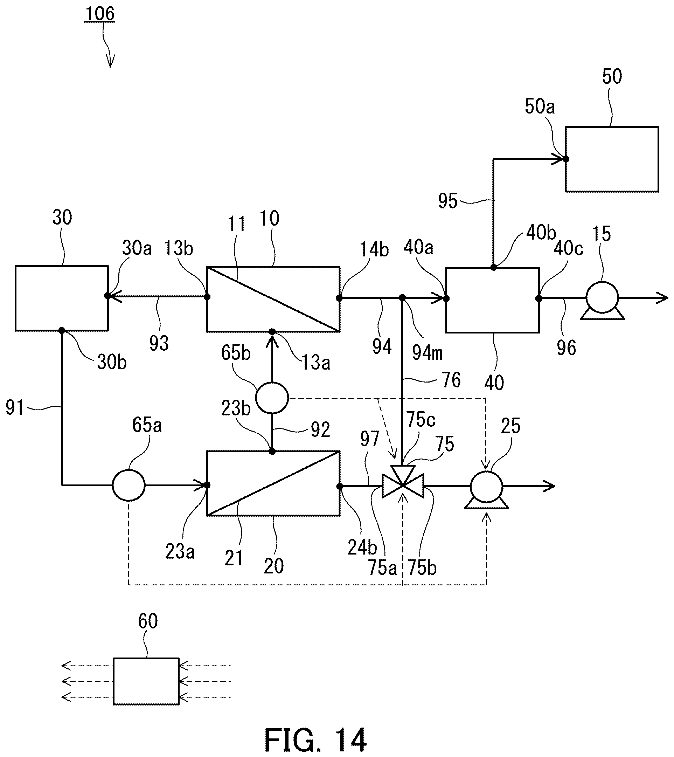

FIG. 14 is a schematic configuration diagram showing Modification 6 of the membrane separation system 100. In a membrane separation system 106 shown in FIG. 14, the degassing unit 20 has the degassing membrane 21. The material which the degassing membrane 21 is composed of is identical to the material which the pervaporation membrane 11 is composed of. The degassing membrane 21 may have a structure identical to that of the pervaporation membrane 11, except for its membrane area and a thickness of each layer. In the membrane separation system 106, the degassing membrane 21 can function as a pervaporation membrane depending on a carbon dioxide concentration in a fluid.

The membrane separation system 106 has a configuration identical to that of the membrane separation system 100 shown in FIG. 1, except that the membrane separation system 106 includes a CO₂ sensor 65 provided to the first fermented liquid feed passage 91 and/or the second fermented liquid feed passage 92, a valve 75 provided to the second discharge passage 97, and a switching flow passage 76 that connects the valve 75 to a joining spot 94m of the first permeated fluid discharge passage 94.

The valve 75 is typically a three-way valve having a first inlet port 75a, a first outlet port 75b, and a second outlet port 75c. An upstream-side portion of the second discharge passage 97 connects the first inlet port 75a to the outlet 24b of the degassing unit 20. A downstream-side portion of the second discharge passage 97 connects the first outlet port 75b to the second decompression unit 25. The switching flow passage 76 connects the second outlet port 75c to the joining spot 94m.

The CO₂ sensor 65 includes at least one CO₂ sensor selected from a first CO₂ sensor 65a provided to the first fermented liquid feed passage 91 and a second CO₂ sensor 65b provided to the second fermented liquid feed passage 92. The CO₂ sensor 65 may be at least one selected from the first CO₂ sensor 65a and the second CO₂ sensor 65b. That is, the CO₂ sensor 65 may be the first CO₂ sensor 65a or the second CO₂ sensor 65b, or both of the first CO₂ sensor 65a and the second CO₂ sensor 65b.

The first CO₂ sensor 65a measures the carbon dioxide concentration in the fluid that flows through the first fermented liquid feed passage 91. The second CO₂ sensor 65b measures the carbon dioxide concentration in the fluid that flows through the second fermented liquid feed passage 92.

### <Method for operating membrane separation system of modification 6>

Hereinafter, an example of a method for operating the membrane separation system of Modification 6 will be described.

### (Degassing mode)

The membrane separation system 106 can be operated as follows, for example. When the carbon dioxide concentration in the fluid measured by the CO₂ sensor 65 is higher than a first threshold, the control unit 60 opens the first inlet port 75a and the first outlet port 75b and closes the second outlet port 75c of the valve 75 while driving the second decompression unit 25. Thereby, the degassing membrane 21 of the degassing unit 20 functions as a degassing membrane (a degassing mode).

In the degassing mode, when the carbon dioxide concentration in the fluid measured by the CO₂ sensor 65 is higher than a second threshold (note that the first threshold ≤ the second threshold), the control unit 60 may adjust a pressure of the second decompression unit 25 to be low. Thereby, degassing performance of the degassing unit 20 can be improved (degassing performance improving mode).

In the degassing mode, when the carbon dioxide concentration in the fluid measured by the CO₂ sensor 65 is equal to or lower than the second threshold, the control unit 60 may adjust the pressure of the second decompression unit 25 to be high. Thereby, degassing performance of the degassing unit 20 can be lowered (power consumption saving mode). The power consumption saving mode makes it possible to reduce power to be consumed by the second decompression unit 25.

### (Pervaporation mode)

The membrane separation system 106 can be operated as follows, for example. When the carbon dioxide concentration in the fluid measured by the CO₂ sensor 65 is equal to or lower than the first threshold, the control unit 60 opens the first inlet port 75a and the second outlet port 75c and closes the first outlet port 75b of the valve 75 while operating the first decompression unit 15. Thereby, the degassing membrane 21 of the degassing unit 20 functions as a pervaporation membrane (a pervaporation mode). The permeated fluid that is a gaseous matter and has been discharged from the outlet 24b of the degassing unit 20 passes through the switching flow passage 76 and flows into the condensation unit 40 to be condensed.

The first threshold can be set suitably according to the configuration of the membrane separation system 106. In one example, the first threshold may be 1500 mg/L or less. The lower limit of the first threshold is not particularly limited, and may be 200 mg/L or less, or 100 mg/L or less, for example.

The second threshold can be set suitably depending on the first threshold as long as the first threshold ≤ the second threshold is satisfied.

The above description of one embodiment is applicable to the other embodiments unless technical inconsistency occurs. The above embodiments and modifications may be combined with each other unless technical inconsistency occurs. For example, one system may be configured by combining the membrane separation system 103 of Modification 3 (FIG. 10), the membrane separation system 104 of Modification 4 (FIG. 11), and the membrane separation system 105 of Modification 5 (FIG. 12) described above. For example, the CO₂ sensor 65, the valve 75, and the switching flow passage 76 of the membrane separation system 106 of Modification 6 (FIG. 14) may be combined with each of the membrane separation system 101 of Modification 1 (FIG. 8), the membrane separation system 103 of Modification 3 (FIG. 10), and the membrane separation system 105 of Modification 5 (FIG. 12).

### EXAMPLES

Hereinafter, the present invention will be described in more detail by way of Example and Comparative Example, but the present invention is not limited to these examples.

### [Production of separation membrane]

First, a separation membrane was produced by the following method. A coating liquid was prepared by mixing 1.650 kg (solids concentration: 30 wt%) of a silicone resin (YSR3022 available from Momentive Performance Materials Japan LLC.), 2.805 kg of toluene, 0.495 kg of a high-silica zeolite (HiSiv 3000 available from UNION SHOWA K.K.), 0.0495 kg of a silicone curing catalyst (YC6831 available from Momentive Performance Materials Japan LLC.), and 0.0495 kg of acetylacetone as a curing retardant. Next, the coating liquid was applied onto a porous support (RS-50 available from Nitto Denko Corporation) having a thickness of 150 µm to obtain a coating (thickness: 500 µm). The coating was heated at 90°C for 4 minutes and then dried to produce a separation functional layer having a thickness of 50 µm. The weight ratio between the silicone resin and the high-silica zeolite was 50:50 in the separation functional layer. Thus, a separation membrane was obtained.

### (Example 1)

The membrane separation system 100 shown in FIG. 1 was operated using the produced separation membrane. Specifically, in the membrane separation system 100, the above separation membrane was used as the pervaporation membrane 11 included in the membrane separation unit 10. The above separation membrane was used as the degassing membrane 21 included in the degassing unit 20. The membrane separation unit 10 was a spiral membrane element as shown in FIG. 6.

The degassing unit 20 was a spiral membrane element as shown in FIG. 7. As a model fermented liquid, a liquid obtained by bubbling a CO₂ gas into a 30°C, 0.8 wt% butanol aqueous solution at 100 mL/minute. The circulation flow rates of the first fermented liquid feed passage 91, the second fermented liquid feed passage 92, and the non-permeated fluid discharge passage 93 were set to 100 g/minute. The pressure in the permeation space of the membrane separation unit 10 was reduced to 1.5 kPa by the first decompression unit 15. The pressure in the degassing unit 20 was reduced to 10 kPa by the second decompression unit 25. The condensation unit 40 was set to have a condensation temperature of -7°C and a heat transfer area of 0.049 m².

### (Comparative Example 1)

The membrane separation system 100 shown in FIG. 1 was operated under the same conditions as those in Example 1, except that the inside of the degassing unit 20 was not decompressed. That is, the degassing by the degassing unit 20 was not carried out in Comparative Example 1.

The carbon dioxide concentration (mg/L) in the model fermented liquid discharged from the degassing unit 20 was measured by the CO₂ sensor (not shown) provided to the second fermented liquid feed passage 92. The amount of butanol (g/hr) contained in the gaseous emission from the first decompression unit 15 was measured. The amount of butanol (%) contained in the gaseous emission was calculated by measuring the flow rate of the gas emitted from the decompression unit 15 and the butanol concentration in the emitted gas. Table 1 shows the carbon dioxide concentration in the model fermented liquid discharged from the degassing unit 20 and the amount of butanol contained in the gaseous emission from the first decompression unit 15 in each of Example 1 and Example 2.

**[Table 1]**

| | CO₂ concentration in model fermented liquid discharged from degassing unit (mg/L) | Amount of butanol contained in gaseous emission from first decompression unit (g/hr) | Ratio of amount of butanol contained in gaseous emission from first decompression unit with respect to amount of butanol obtained in condensation unit (%) |
|---|---|---|---|
| Comparative Example 1 | 600 | 0.17 | 7 |
| Example 1 | 200 | 0.03 | 1.3 |

As shown in Table 1, the amount of butanol contained in the gaseous emission was smaller, that is, the loss of butanol was less in Example 1 than in Comparative Example 1. This is inferred to be because in Example 1, CO₂ was separated from the model fermented liquid by the degassing unit 20 to lower the carbon dioxide concentration and thereby a decrease in the condensation efficiency of the condensation unit 40 provided at a position subsequent to the degassing unit 20 was suppressed. In this manner, in the membrane separation system 100 shown in FIG. 1, the content of the dissolved gas G is lowered by the degassing unit 20 and thereby a decrease in the condensation efficiency of the condensation unit 40 provided at a position subsequent to the degassing unit 20 is suppressed, and as a result, the efficiency in recovering the organic compound C can be improved.

### INDUSTRIAL APPLICABILITY

The membrane separation system of the present embodiment is suitable for recovering an organic compound efficiently.

## Claims

1. A membrane separation system comprising:
a degassing unit that degasses a fermented liquid containing a volatile organic compound; and
a membrane separation unit having a pervaporation membrane that separates the fermented liquid having been degassed into a permeated fluid and a non-permeated fluid.

2. The membrane separation system according to claim 1, wherein
the membrane separation unit further has a feed space and a permeation space separated from each other by the pervaporation membrane, and
the membrane separation system further comprises a first decompression unit that decompresses an inside of the permeation space of the membrane separation unit, and a second decompression unit that decompresses an inside of the degassing unit.

3. The membrane separation system according to claim 2, wherein a pressure in the permeation space of the membrane separation unit is reduced to have a value lower than that of a pressure in the degassing unit during operation.

4. The membrane separation system according to claim 1, further comprising a tank that stores the fermented liquid to be supplied to the degassing unit.

5. The membrane separation system according to claim 1, further comprising a discharge passage that allows a gas separated in the degassing unit to be discharged to an outside of the degassing unit.

6. The membrane separation system according to claim 1, wherein the degassing unit has a degassing membrane that separates a gas from the fermented liquid.

7. The membrane separation system according to claim 1, wherein
the membrane separation unit is a spiral membrane element, and
the membrane element includes a central tube having a through hole, and a membrane leaf that has the pervaporation membrane and is wound around the central tube.

8. The membrane separation system according to claim 6, wherein
the degassing unit is a spiral membrane element, and
the membrane element includes a central tube having a through hole, and a membrane leaf that has the degassing membrane and is wound around the central tube.

9. The membrane separation system according to claim 6, wherein a material which the degassing membrane is composed of is identical to a material which the pervaporation membrane is composed of.

10. The membrane separation system according to claim 1, further comprising a casing that accommodates the degassing unit and the membrane separation unit.

11. The membrane separation system according to claim 10, wherein
the membrane separation unit further has a feed space and a permeation space separated from each other by the pervaporation membrane, and
the membrane separation system further comprises a first decompression unit that decompresses an inside of the permeation space of the membrane separation unit, and a second decompression unit that decompresses an inside of the degassing unit.

12. The membrane separation system according to claim 11, wherein a pressure in the permeation space of the membrane separation unit is reduced to have a value lower than that of a pressure in the degassing unit during operation.

13. The membrane separation system according to claim 1, wherein
the fermented liquid further contains a microorganism that generates the organic compound, and
the membrane separation system further comprises, at a position preceding the degassing unit, an additional separation unit that separates the microorganism from the fermented liquid.

14. A method for operating a membrane separation system including a degassing unit and a membrane separation unit having a pervaporation membrane, the method comprising:
degassing a fermented liquid containing a volatile organic compound with the degassing unit; and
separating the fermented liquid having been degassed into a permeated fluid and a non-permeated fluid with the pervaporation membrane of the membrane separation unit.
